# EUROPÄISCHE PATENTSCHRIFT

(11) **EP 2 906 851 B1**
(45) Veröffentlichungstag und Bekanntmachung des Hinweises auf die Patenterteilung: **19.04.2017**
(21) Anmeldenummer: 13732937.1
(22) Anmeldetag: 01.07.2013
(51) Int. Cl.: F16F 13/16

(54) **HYDRAULISCH DÄMPFENDES BUCHSENLAGER**
HYDRAULICALLY DAMPING BUSH BEARING
COUSSINET ASSURANT UN AMORTISSEMENT HYDRAULIQUE

(30) Priorität: 31.07.2012 DE 102012213447
(43) Veröffentlichungstag der Anmeldung: 19.08.2015
(73) Patentinhaber: BOGE Elastmetall GmbH, 49401 Damme (DE); Audi AG, 85045 Ingolstadt (DE)
(72) Erfinder: SCHNAARS, Wolfgang, 49084 Osnabrueck (DE); CONRAD, Thomas, 91757 Treuchtlingen (DE)
(74) Vertreter: Bossmeyer, Jörg Peter
(86) Internationale Anmeldenummer: PCT/EP2013/063801
(87) Internationale Veröffentlichungsnummer: WO 2014/019786

(56) Entgegenhaltungen:
- DE-A1- 10 359 340
- US-A1- 2003 201 590

## Beschreibung

Die vorliegende Erfindung betrifft ein hydraulisch dämpfendes Buchsenlager mit einem Innenteil, einer Außenbuchse und einem zwischen der Außenbuchse und dem Innenteil angeordneten elastomeren Dämpfungsglied. Ein solches hydraulisch dämpfendes Buchsenlager ist aus der DE 103 59 340 A1 bekannt und hat ferner ein Axialkammerpaar mit wenigstens zwei in axialer Richtung des Innenteils versetzt zueinander angeordneten und miteinander über zumindest einen Axialkammerkanal kommunizierenden Axialkammern. Des Weiteren ist ein Radialkammerpaar mit wenigstens zwei, zwischen den Axialkammern vorgesehenen und in Umfangsrichtung des Innenteiles versetzt angeordneten Radialkammern, die über wenigstens einen radialen Dämpfungskanal kommunizieren, vorgesehen. Das Dämpfungsteil ist länglich, üblicherweise als Zylinder ausgebildet. Regelmäßig hat das Innenteil bei dem gattungsgemäßen Buchsenlager eine Bohrung zur Aufnahme eines Achsstiftes eines zu lagernden Maschinenelementes oder Bauteils.

Gattungsgemäße hydraulisch dämpfende Buchsenlager werden vor allen Dingen im Fahrzeugbau angewendet und dienen der Lagerung von Teilen der Radaufhängung oder der Antriebsaggregate der Fahrzeuge. Neben elastischen Dämpfungselementen, die üblicherweise aus einem Elastomer gebildet sind, umfasst das hydraulisch dämpfende Buchsenlager Kammern zur Aufnahme einer hydraulischen Dämpfungsflüssigkeit, welche die Dämpfung unterstützt. In elastomeren Einsatzteilen bzw. Gummikörpern des hydraulisch dämpfenden Buchsenlagers werden dementsprechend Kammern zur Aufnahme der Dämpfungsflüssigkeit vorgesehen, um den durch diese Dämpfungsflüssigkeit bewirkten Tilgereffekt zu nutzen. Die genaue Größe und Position der Kammern hängt von dem Einsatzzweck des hydraulisch dämpfenden Lagers, insbesondere den entsprechenden gewünschten Dämpfungseffekten in axialer, d.h. Längsrichtung des Innenteiles und einer Richtung quer hierzu, d.h. radialer Richtung ab. Das Schwingungsverhalten des zu lagernden Bauteils ist ebenfalls von Bedeutung, wie auch das Eigengewicht der zu lagernden und dämpfenden Masse. Jedenfalls werden die Kammern üblicherweise durch einen oder mehrere Kanäle miteinander verbunden. Je nach Beanspruchung kann das hydraulische Dämpfungsmittel dementsprechend von einer Kammer in die andere gedrückt werden. Es sind sowohl Lager bekannt, bei denen die hydraulische Dämpfung in Bezug auf radial in das Buchsenlager eingetragene Kräfte genutzt wird, als auch solche, bei denen vornehmlich die Dämpfung durch die axiale Dämpfungsflüssigkeit unterstützt wird. Der zuvor erwähnte Stand der Technik ist ein Beleg für ein Buchsenlager, bei dem der Tilgereffekt sowohl in axialer als auch in radialer Richtung genutzt wird.

Es hat sich indes gezeigt, dass ein gattungsgemäßes hydraulisch dämpfendes Buchsenlager bei Schwingungen mit höherer Frequenz, insbesondere Schwingungen im Bereich 50 Hz bis 150 Hz, insbesondere > 250 Hz des dämpfend zu lagernden Bauteils eine ungewollt hohe Dämpfung und damit eine Verhärtung auftritt. Die gewünschte Dämpfung über das hydraulisch dämpfende Buchsenlager ist bei diesen höheren Frequenzen nicht mehr in der gewünschten Weise gewährleistet.

Der vorliegenden Erfindung liegt das Problem zugrunde, ein hydraulisch dämpfendes Buchsenlager anzugeben, welches auch bei höheren Frequenzen eine gute Dämpfung zeigt. Dabei will die vorliegende Erfindung ein hydraulisch dämpfendes Buchsenlager angeben, welches bei höheren Frequenzen in axialer Richtung keine ungewollt hohe Dämpfung bewirkt. Das hydraulische Dämpfungslager soll den im Stand der Technik zu beobachtenden Verhärtungssprung bei höheren Frequenzen ab ca. 250 mHz vermeiden, und zwar insbesondere bei axialer Dämpfung.

Zur Lösung des obigen Problems wird mit der vorliegenden Erfindung ein hydraulisch dämpfendes Buchsenlager mit den Merkmalen von Anspruch 1 vorgeschlagen.

Das hydraulisch dämpfende Buchsenlager hat in an sich bekannter Weise ein längliches Innenteil. Dieses längliche Innenteil hat in an sich bekannter Weise eine entlang der Längsachse verlaufende Bohrung, die auch als Sackloch, d.h. nicht durchgehend ausgebildet sein kann. Die Bohrung verläuft regelmäßig in Längsrichtung des länglichen Innenteiles, welches dementsprechend als Hülse ausgeformt ist. Einseitig wird dieses Innenteil üblicherweise von einer Anschlagscheibe überragt, welche der Montage des zu dämpfenden Maschinenelementes bzw. Bauteiles dient. An dieser Anschlussseite befindet sich auch eine üblicherweise in Umfangsrichtung durchgehend ausgebildete Axialkammer, welche über zumindest einem Axialkanal mit einer axialen Ausgleichskammer an einer anderen Seite des Buchsenlagers kommuniziert.

Zwischen diesen das Axialkammerpaar bildenden Axialkammern befindet sich das elastomere Dämpfungsglied, welches üblicherweise aus einem elastomeren Material gebildet ist und durch einen Käfig versteift sein kann, der vollständig in das elastomere Material des Dämpfungsgliedes einvulkanisiert ist. Das elastomere Dämpfungsglied bildet üblicherweise an gegenüberliegenden Umfangsabschnitt zwei Radialkammern aus, die über zumindest einen Radialkanal miteinander kommunizieren und das Radialkammerpaar bilden. Zwar sind zwei Radialkammern im Stand der Technik allgemein bekannt. Die vorliegende Erfindung ist indes nicht auf eine solche Ausgestaltung beschränkt. Vielmehr kann das erfindungsgemäße Buchsenlager auch drei, vier oder mehrere auf den Umfang verteilt vorgesehene Radialkammern aufweisen, die das Radialkammerpaar bilden.

Des Weiteren umfasst das hydraulisch dämpfende Buchsenlager vorzugsweise Zusatzelemente, die verschiedene Funktionen erfüllen. Bei zwei Radialkammern können lediglich zwei Zusatzelemente vorgesehen sein. Die Zusatzelemente erstrecken sich zum einen innerhalb von durch das elastomere Dämpfungsglied gebildeten Ausbuchtungen für die Radialkammern und bilden dementsprechende Randflächen für diese Radialkammern aus. Die Zusatzelemente stützen sich in radialer Richtung außen üblicherweise an einer außenumfänglich das Buchsenlager begrenzenden Buchse ab und dienen als Radialanschlag, der eine übermäßige radiale Auslenkung des Buchsenlagers unter Verlagerung der in den beiden Radialkammern vorgesehenen Dämpfungsflüssigkeit verhindert. Des Weiteren bilden die Zusatzelemente regelmäßig zwischen ihrer Außenumfangsfläche und der Innenumfangsfläche der Buchse die besagten Radial- und Axialkanäle aus. Je nach Abstimmung der Frequenzlage für das Dämpfungsmaximum können die Kanäle lang, kurz, breit oder schmal sein. Ein Axialkanal verbindet dabei die zumindest zwei Axialkammern des Axialkammerpaars. Dabei erstrecken sich der bzw. die Axialkanäle üblicherweise nicht streng in axialer Richtung, sondern laufen auch in Umfangsrichtung um. Weiterhin bilden diese Zusatzelemente den zumindest einen Radialkanal, der die Radialkammern miteinander verbindet. Dieser Radialkanal ist üblicherweise in den Zusatzelementen allein in Umfangsrichtung verlaufend ausgebildet. Mehrere Zusatzelemente bilden regelmäßig im gefügten Zustand ein zylindrisches Bauteil aus, dessen Außenumfangsfläche mit die Radial- und Axialkanäle ausformenden Ausnehmungen versehen ist. Die axiale Erstreckung der Zusatzelemente ist dabei auf Höhe der Radialkammern, d.h. dort, wo die Zusatzelemente in die durch das elastomere Dämpfungsglied ausgeformten Ausbuchtungen eingreifen, geringer als zwischen diesen Radialkammern. Zwischen den Radialkammern erstrecken sich die Zusatzelemente in axialer Richtung üblicherweise von der besagten axialen Ausgleichskammer bis in etwa zu der anderen Axialkammer.

Erfindungsgemäß ist weiterhin zwischen den in axialer Richtung versetzt zueinander vorgesehenen Axialkammern wenigstens eine flüssigkeitsleere Dämpfungskammer vorgesehen, die die radiale und die axiale Kammer voneinander trennt. Bei den in axialer Richtung versetzt zueinander vorgesehenen Axialkammern handelt es sich üblicherweise um die an der Anschlussseite vorgesehene Dämpfungskammer einerseits und die üblicherweise an dem gegenüberliegenden Ende des Buchsenlagers vorgesehene axiale Ausgleichskammer andererseits, unabhängig davon, ob diese Kammer als einheitliche Ringkammer ausgeformt ist oder aber gemäß einer bevorzugten Ausgestaltung des Erfindungsgegenstandes als sich in radialer Richtung erstreckende, in Umfangsrichtung voneinander beabstandete und getrennte erste Axialkammern. Die flüssigkeitsleere Dämpfungskammer ist mit einem Gas, insbesondere Luft gefüllt. Üblicherweise ist die flüssigkeitsleere Dämpfungskammer versiegelt, so dass bei einer Kompression der Dämpfungskammer der Kammerinhalt komprimiert und nicht aus der Kammer ausgetrieben wird. Die flüssigkeitsleere Dämpfungskammer ist dementsprechend in der Lage, insbesondere höhere Frequenzen axialer Beanspruchungen durch Kompression des in der flüssigkeitsleeren Dämpfungskammer aufgenommenen Mediums in der Regel eines Gases zu absorbieren. Das erfindungsgemäße hydraulische Buchsenlager ist dementsprechend auch bei Axialschwingungen mit höheren Frequenzen ab 250 Hz verhältnismäßig weich. Eine unerwünschte hohe Dämpfung tritt nicht auf.

Die flüssigkeitsleere Dämpfungskammer ist vorzugsweise in Umfangsrichtung durchgehend ausgebildet, so dass das in dieser Kammer enthaltene Fluid sich in Umfangsrichtung bei einer Ausgleichsbewegung frei bewegen kann. In erster Regel gilt das bei der radialen Anregung. Hier tritt der größte Effekt ein.

Bei einer kompakten Weiterbildung ist die flüssigkeitsleere Dämpfungskammer teilweise durch das elastomere Dämpfungsglied und teilweise durch Wandungen eines auf das elastomere Dämpfungsglied aufgesetzten Zwischenmembranelementes gebildet. Dieses Zwischenmembranelement trennt üblicherweise die flüssigkeitsleere Dämpfungskammer von einer regelmäßig unmittelbar benachbart hierzu vorgesehenen axial einseitig vorgelagerten Axialkammer. Dabei handelt es sich insbesondere um die auf der Anschlussseite vorgesehene axiale Flüssigkeits- bzw. Pumpkammer. Mit anderen Worten ist die flüssigkeitsleere Dämpfungskammer regelmäßig auf der Anschlussseite des elastomeren Dämpfungsgliedes vorgesehen.

Dem Zwischenmembranelement kommt vorzugsweise die Aufgabe zu, die flüssigkeitsleere Kammer einzusiegeln und zu umschließen. Das Zwischenmembranelement hat hierzu üblicherweise auf seiner Innenumfangsfläche einen Stützring, der gegen die Außenumfangsfläche des Innenteiles anliegt. Am Außenumfang des Zwischenmembranelementes ist das Zwischenmembranelement vorzugsweise von einer Ringscheibe verstärkt. Sowohl die Ringscheibe als auch der Stützring sind aus einem harten Material, wie beispielsweise einen Thermoplasten oder Metall ausgeformt, so dass sie sich beim Einpressen des Zwischenmembranelementes in einen Ringspalt zwischen der Buchse und dem Innenteil allerhöchstens geringfügig verformen. Die Ringscheibe ist dabei üblicherweise als Kern ausgebildet und mit einem elastomeren Material umhüllt, welches auch auf die Außenumfangsfläche des Stützringes aufvulkanisiert ist.
Vorzugsweise unmittelbar benachbart zu der Außenumfangsfläche des Stützringes, formt das Zwischenmembranelement bevorzugt ein Ringkammersegment aus, welches eine Ringkammer der flüssigkeitsleeren Dämpfungskammer ausbildet. Des Weiteren formt das Zwischenmembranelement gemäß einer bevorzugten Weiterbildung der folgenden Erfindung ein dichtend an das elastomere Dämpfungsglied anlegbares Dichtungssegment aus. Dieses Dichtungssegment liegt üblicherweise dort an dem elastomeren Dämpfungsglied an, wo dieses durch den zuvor erwähnten Käfig verstärkt ist. Mit anderen Worten hat das elastomere Dämpfungsglied im Anlagebereich zu der von dem Dichtungssegment gebildeten Dichtfläche ein Versteifungselement, welches das elastomere Dämpfungsglied insbesondere in axialer Richtung verstärkt, wobei dieses Versteifungselement üblicherweise durch den Käfig gebildet wird.

Mit Blick auf eine gute Abdichtung ist das Zwischenmembranelement vorzugsweise derart ausgebildet, dass ein innerer Ringwandungsabschnitt des Ringkammersegmentes auf das Innenteil aufschiebbar und in axialer Richtung gegenüber dem Innenteil derart festlegbar ist, dass das Dichtungssegment in einem ungespannten Ausgangszustand gegenüber einer Stirnseite des Ringwandungsabschnitts in Richtung auf das elastomere Dämpfungsglied mit Versatz vorspringt. Geht man einmal aus Gründen einer einfachen Anschauung davon aus, dass das Innenteil zur axialen Festlegung des inneren Ringwandungsabschnittes eine ringförmige Anlagefläche ausformt, die höhengleich zu dem durch das elastomere Dämpfungsglied gebildeten Anlagebereich für das Dichtungssegment ist, so überragt die Dichtfläche in einem ungespannten Zustand des Zwischenmembranelementes die an der Ringfläche anliegende Stirnseite des inneren Ringwandungsabschnittes. Wird nun das Zwischenmembranelement eingebaut, so legt sich zunächst das Dichtungssegment an den Anlagebereich des elastomeren Dämpfungsgliedes an. Beim weiteren axialen Vorschieben des Zwischenmembranelementes bis in die endgültige und durch die Ringfläche des Innenteiles radial vorgegebene Einbaulage, speichert das elastomere Material des Zwischenmembranelement eine sich hierbei ergebende axiale Vorspannung innerhalb des Zwischenmembranelementes, welche das Dichtungssegment gegen das elastomere Dämpfungsglied drängt. Durch diese Maßnahme ist die Dichtigkeit zwischen dem Zwischenmembranelement und dem elastomeren Dämpfungsglied erhöht, so dass sich die auf der anderen Seite des Zwischenmembranelementes vorgesehene Axialkammer in radialer Richtung bis über das Dämpfungsglied erstrecken kann und das Dichtungssegment nicht zwingend zwischen dem elastomeren Dämpfungsglied und einem endseitig vorgesehenen Element zur axialen Verpressung des Zwischenmembranelementes an seiner radialen Außenfläche vorgesehen sein muss. Die durch das Zwischenmembranelement begrenzte Axialkammer kann bei dieser Ausgestaltung radial weiter nach außen reichen.

Mit Blick auf eine Beschränkung der Bewegung in radialer Richtung, insbesondere der kardanischen Auslenkung, durch Kompression der flüssigkeitsleeren Dämpfungskammer wird gemäß einer bevorzugten Weiterbildung ein Anschlagselement vorgeschlagen, welches in der flüssigkeitsleeren Dämpfungskammer angeordnet ist. Regelmäßig und zumindest zwei Anschlagselemente verwirklicht, die sich in radialer Richtung gegenüberliegen. Dabei ist das Anschlagselement vorzugsweise mit dem Zwischenmembranelement verbunden und wirkt mit dem elastomeren Dämpfungsglied zusammen. Folglich kann ein gedämpftes und weiches Anschlagen durch die Materialeigenschaften des elastomeren Dämpfungsgliedes erreicht werden, wohingegen das Anschlagselement selbst aus einem härteren Material, wie beispielsweise einem üblichen Thermoplast, gebildet sein kann.

Das Anschlagselement wird vorzugsweise als separates Bauteil hergestellt und mit einem Kern des Zwischenmembranelementes verbunden. Bei diesem Kern handelt es sich insbesondere um die zuvor bereits erwähnte Ringscheibe des Zwischenmembranelementes, welche aus einem härteren Material gebildet sein kann. Das Anschlagelement und/oder der Kern können dabei aus Kunststoff hergestellt sein, wobei zumindest eines der Elemente bei zweiteiliger Ausgestaltung einen oder mehrere daran einteilig angeformte Stifte für die Verbindung beider Teile hat.

Wie bereits zuvor erwähnt ist gemäß einer bevorzugten Weiterbildung des Erfindungsgegenstandes zumindest auf einer Seite der Radialkammern die dort vorgesehene Axialkammer unterteilt. Es befinden sich an dieser einen Seite mehrere voneinander beabstandete und getrennte erste Axialkammern. Dementsprechend kann die Dämpfungsflüssigkeit an dieser einen Seite, die üblicherweise der Anschlussseite gegenüber liegt, nicht in der Axialkammer frei umlaufen. Vielmehr sind in Umfangsrichtung mehrere als Ringsegmente ausgeformte erste Axialkammern vorgesehen, welche die radiale Beweglichkeit der Dämpfungsflüssigkeit begrenzen. Die einzelnen ersten Axialkammern stehen dabei üblicherweise jeweils über einen eigenen Axialkanal mit der in der Regel voll umfänglich umlaufenden Axialkammer auf der anderen Seite in Verbindung. Bei dieser anderen Seite handelt es sich üblicherweise um die Anschlussseite, d.h. diejenige Seite, über welche eine axial abzustützende und zu dämpfende Last eines zu lagernden Bauteils in das hydraulisch dämpfende Buchsenlager eingebracht wird. Es ist auch möglich, die Axialkammer auf der Anschlussseite in Umfangsrichtung unterteilt auszubilden. So kann jedem Ringsegment auf der einen Seite eine ringsegmentförmige Axialkammer auf der Anschlussseite zugeordnet sein, wobei jeweils ein Axialkanal lediglich einander zugeordnete ringsegmentförmige Kammern auf der Anschluss- und der anderen Seite verbindet.

Untersuchungen der Anmelderin haben ergeben, dass die Ausgestaltung von mehreren axialen Ausgleichskammern an der ersten Seite die Dämpfungseigenschaft des hydraulisch dämpfenden Buchsenlagers, insbesondere bei höheren Frequenzen ab 250 Hz, verbessert werden können. Ungewollt hohe Dämpfungen, insbesondere in radialer Beaufschlagung, werden vermieden.

Gemäß einer weiteren bevorzugten Weiterbildung sind die in Umfangsrichtung voneinander beabstandeten ersten Axialkammern durch eine aus dem elastomeren Dämpfungsglied ausgeformte Teilung voneinander getrennt. Diese Teilung hat in Querschnittsrichtung üblicherweise die Kontur der ersten Axialkammern. Dabei wird insbesondere davon ausgegangen, dass die ersten Axialkammern durch eine Gegenmembran, die üblicherweise endseitig an der Buchse angeordnet ist, gebildet werden. Konkret formt die Gegenmembran vorzugsweise einen in Umfangsrichtung umlaufenden Ringspalt aus, der in Umfangsrichtung mit konstantem Querschnitt ausgebildet ist. Die von dem elastomeren Dämpfungsglied ausgeformte Teilung hat eine diesen Querschnitt entsprechende Kontur und ragt in den Ringkanal derart hinein, dass die Innenfläche des Ringkanals in einem Ausgangszustand an der Außenfläche der Teilung anliegt und dementsprechend die ersten Axialkammern gegeneinander abteilt und voneinander trennt. Bei übermäßiger axialer Lastaufnahme, bei welcher die Dämpfungsflüssigkeit von der an der Anschlussseite vorgesehenen Axialkammern auf die Ausgleichsseite verdrängt wird, kann indes die Gegenmembran von der Teilung abheben, so dass die Trennung aufgehoben ist. Im Ausgangszustand, der von der Vorspannung des hydraulisch dämpfenden Buchsenlagers abhängt, liegt indes die Gegenmembran an der Teilung an.

Weitere Einzelheiten und Vorteile der folgenden Erfindung ergeben sich aus der nachfolgenden Beschreibung eines Ausführungsbeispiels in Verbindung mit der Zeichnung. In dieser zeigen:
- Figur 1: eine Längsschnittansicht des Ausführungsbeispiels;
- Figur 2: eine weitere Längsschnittansicht des Ausführungsbeispiels, die gegenüber der Darstellung in Figur 1 um 90 Grad versetzt ist,
- Figur 3: eine perspektivische, teilweise geschnittene Darstellung des Ausführungsbeispiels unter Weglassung der Buchse und

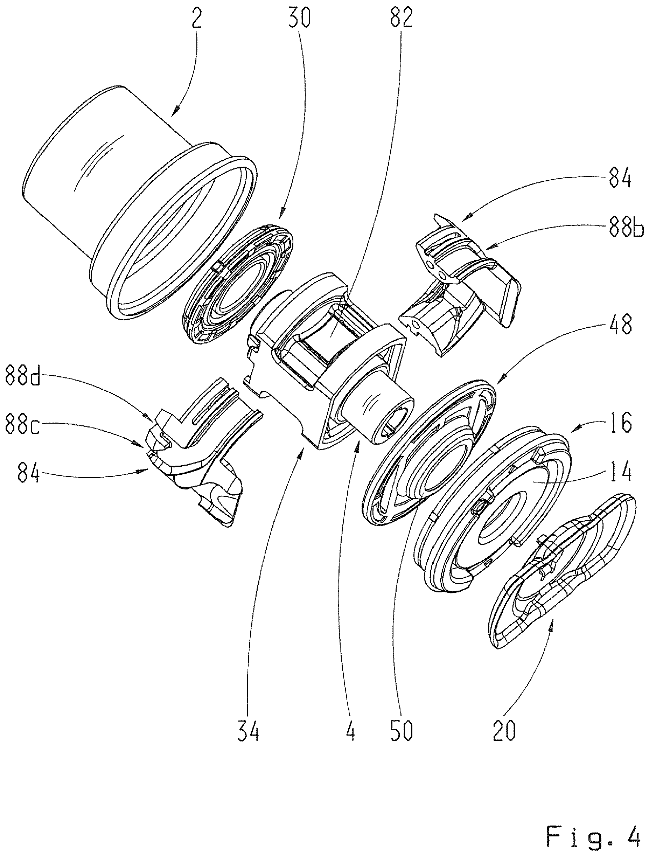

- Figur 4: eine perspektivische Explosionsdarstellung des Ausführungsbeispiels.

Die Figuren zeigen ein Ausführungsbeispiel eines hydraulisch dämpfenden Buchsenlagers mit einer zu Bezugzeichen 2 gekennzeichneten Buchse, die konzentrisch zu einem Innenteil 4 angeordnet ist, welches die Buchse 2 durchsetzt. Die Buchse 2 hat auf einer mit Bezugzeichen 6 gekennzeichneten Anschlussseite einen vergrößerten Durchmesser und bildet im Grunde zwei Zylinderabschnitte aus, die über eine Anlageschulter 8 miteinander verbunden sind. Die durchmesserverbreitete Anschlussseite der Buchse 2 nimmt eine mit Bezugszeichen 10 gekennzeichnete axiale Lagermembran in sich auf, die an ihrem Außenumfang durch einen Haltering 12 und an ihrem Innenumfang durch einen Stützflansch 14 verstärkt ist. Der Haltering 12 und der Stützflansch 14 sind mit dem die Lagermembran 10 ausformenden elastomeren Material durch Vulkanisieren verbunden. Das so gebildete einteilige Lagermembranelement 16 ist in dem Ringspalt zwischen der Buchse 2 und dem Innenteil 4 eingepresst. Zusätzlich ist die Buchse 2 an ihrer Anschlagsseite umbördelt und übergreift den Haltering 12. Innerhalb dieser Umbördelung bildet die Lagermembran 10 an gegenüberliegenden Umfangsabschnitten jeweils einen Anschlagpuffer 18 aus, der von einer axialen Anschlagscheibe 20 überragt ist, die dem Innenteil 4 zugeordnet und mit diesem verbunden ist, und der an der Unterseite des Buchsenlagers axial wirkt. Die axiale Anschlagscheibe 20 liegt auf einem sich radial erstreckenden Ringabschnitt des Stützflansches 14 auf.

Auf der Anschlagsschlussseite 6 gegenüberliegenden und mit Bezugszeichen 22 gekennzeichneten Oberseite ist die Buchse 2 durch eine axiale Gegenmembran 24 abgedeckt, die - wie die zuvor beschriebene Lagermembran 10 - ringförmig ausgeformt und radial innen durch einen Stützring 26 und radial außen durch einen Haltering 28 verstärkt ist. Auch an dieser Oberseite 22 befindet sich ein durch Vulkanisieren und Verbinden von Stützring 26, Halterring 28 und axiale Gegenmembran 24 ausgeformtes einheitliches Gegenmembranelement, welches einen oberen axialen Anschlagpuffer 30 ausbildet, welches in dem Ringspalt zwischen der Buchse 2 und dem Innenteil 4 in radialer Richtung verpresst ist. Das Innenteil 4 bildet eine Gegenmembrananlageschulter 32 aus, gegen welche das elastomere Material der Gegenmembran 24 unter der Presskraft des auf das Innenteil 4 aufgepressten Stützrings 26 dichtend anliegt.

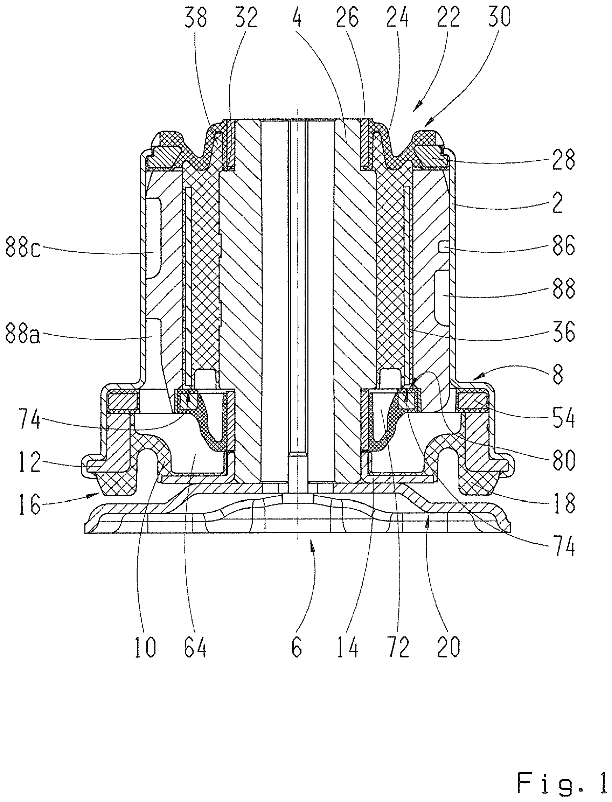

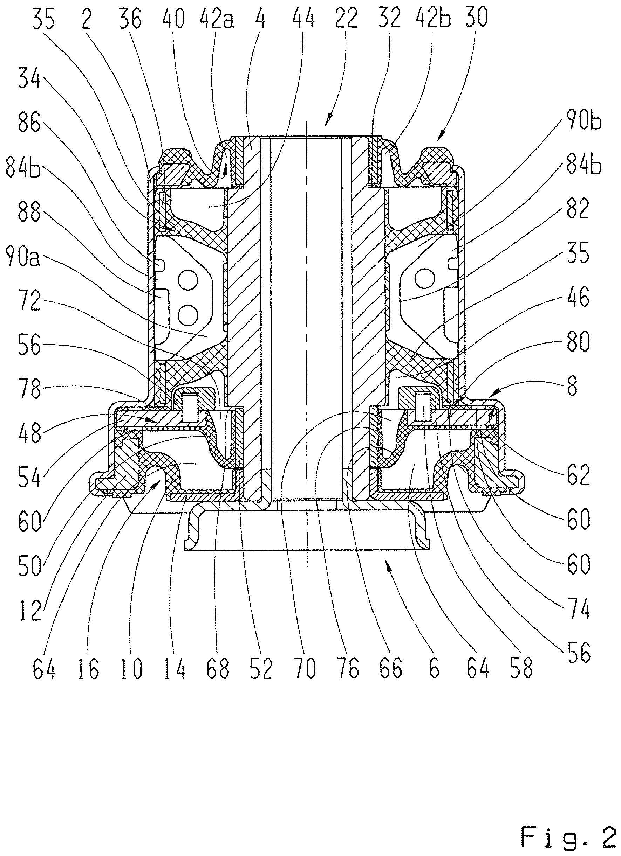

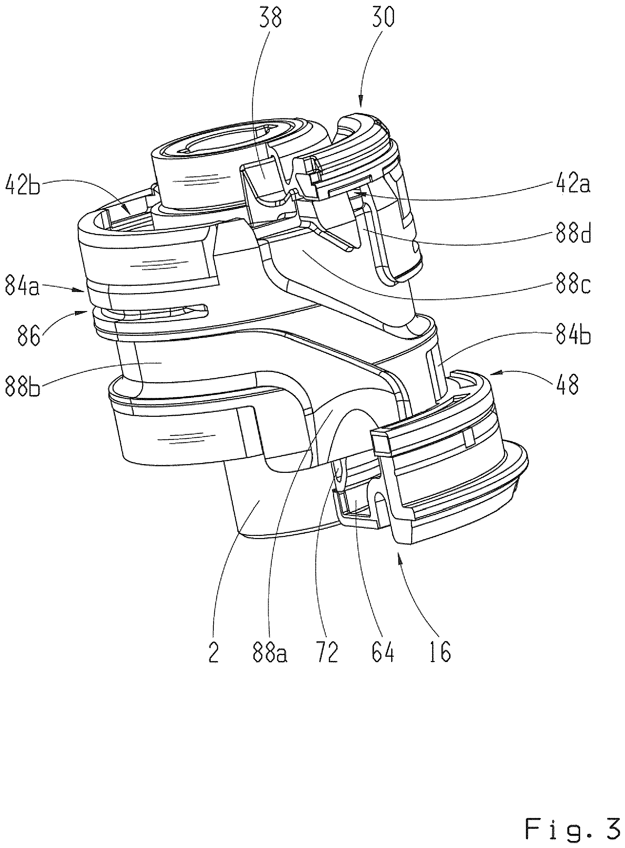

Axial innerhalb des oberen axialen Anschlagpuffers 30 und das Innenteil 4 umgebend ist ein elastomeres Dämpfungsglied 34 vorgesehen, welches aus einem elastomeren Material gebildet ist und in das ein aus einem Blechmaterial geformter Käfig 36 einvulkanisiert ist und radiale Kammerwände 35 ausbildet. Dieser Käfig 36 erstreckt sich im Wesentlichen über die gesamte axiale Erstreckung des elastomeren Dämpfungsgliedes 34. Wie insbesondere Figur 2 zu entnehmen ist, verstärkt der Käfig 36 eine durch das elastomere Dämpfungsglied 34 gebildete Anlagefläche zur Anlage des Gegenmembranelementes 30 auf Höhe des Halterings 24, der durch eine Umbördelung der Buchse in axialer Richtung fixiert ist. Insofern ergibt sich eine solide Abdichtung zwischen dem elastomeren Dämpfungsglied 34 und dem Gegenmembranelement 30. An dieser Seite bildet das elastomere Dämpfungsglied ferner an in radialer Richtung gegenüberliegenden Seiten mit Bezugszeichen 38 gekennzeichnete Teilungen aus, deren Kontur der Kontur eines durch die Gegenmembran ausgeformten Ringkanals 40 entsprechen (vgl. Figur 1, Figur 3). Dementsprechend ist der Ringkanal 40 in Umfangsrichtung geteilt in zwei im Wesentlichen gleichgroße, erste Axialkammern 42, die als separate Axialkammern 42 a, 42 b in Figur 2 kenntlich gemacht sind. Diese Axialkammern 42 a, b erstrecken sich in Umfangsrichtung in etwa mit einem Winkel von 160 Grad.

Der Ringkanal 40 kommuniziert mit einer an dem stirnseitigen Ende des elastomeren Dämpfungsgliedes 34 ausgeformten Mulde 44, die wie der Ringkanal 40 durch die Teilung 38 in Umfangsabschnitte unterteilt ist. Die in Umfangsrichtung voneinander getrennten Muldenabschnitte gehören zu den beiden ersten Axialkammern 42 a, 42 b.

Eine entsprechende Mulde 46 ist an der gegenüberliegenden Stirnseite des elastomeren Dämpfungsgliedes 34 ausgeformt. Diese Mulde 46 wird durch ein mit Bezugszeichen 48 gekennzeichnetes Zwischenmembranelement abgedeckt, welches eine sich im Wesentlichen in radialer Richtung erstreckende Zwischenmembran 50, einen Zwischenmembranstützring 52, eine einen Kern des Zwischenmembranelementes 48 bildende Ringscheibe 50 sowie mit Bezugszeichen 56 gekennzeichnete Anschlagselemente umfasst, die sich in Radialrichtung gegenüberliegen (vgl. Figur 2). Zur Ausbildung des Zwischenmembranelementes wird zunächst der Zwischenmembranstützring 52 und die Ringscheibe 54 mit elastomerem Material umgeben, wobei eine Anlagefläche für die Anschlagselemente 56 freigelassen wird. Die Ringscheibe 54 wird dabei durch Abstandsnocken 60, die einteilig an der Ringscheibe 54 an radial gegenüberliegenden Bereichen ausgeformt sind, in einem Formwerkzeug positioniert (vgl. Figur 2) Nach dem Vulkanisieren des elastomeren Materials ist die Zwischenmembran 50 ausgeformt. Danach werden die Anschlagselemente 56 über die Stifte 58 mit der Ringscheibe 54 verbunden. Im montierten Zustand (vgl. Figur 2) ragen die Anschläge 56 in die Mulde 46 herein.

An seinem Außenumfang ist das Zwischenmembranelement 48 zwischen einer durch die Anschlagschulter 8 gebildeten inneren Ringfläche 62 der Buchse 2 und einer Stirnseite am Außenumfang des Lagermembranelementes 16 geklemmt. Auf Höhe der Abstandsnocken 60 ist die axiale Erstreckung des Halteringes 12 reduziert, so dass dieser dort mit dem elastomeren Material der Lagermembran 10 umgeben ist (vgl. Figur 2). Ansonsten erstreckt sich der Haltering 12 in Umfangsrichtung axial bis zu der inneren Stirnseite des Lagermembranelementes 16. Der Haltering klemmt die mit Elastomermaterial umgebene Ringscheibe 54 zwischen sich und der inneren Ringfläche 72 dichtend ein. Somit ist auf der Außenseite des Zwischenmembranelementes 48 eine als Pumpkammer wirkende Axialkammer 64 ausgeformt und dichtend abgeschlossen zwischen dem Zwischenmembranelement 48 und dem Lagermembranelement 16.

Zwischen dem Zwischenmembranstützring 52 und dem inneren Rand der Ringscheibe 54 bildet das Zwischenmembranelement 48 ein Ringkammersegment 66 aus, welches eine durch das Innenteil 4 ausgeformte anschlussseitige Stirnfläche 68 in axialer Richtung und in Richtung auf die Axialkammer 64 überragt und eine Ringkammer 70 umschließt, welche mit der Mulde 64 kommuniziert. Hierdurch ist eine flüssigkeitsleere Dämpfungskammer 72 gebildet, die in Umfangsrichtung umlaufend ausgeformt ist. Diese flüssigkeitsleere Dämpfungskammer 72 ist luftdicht abgeschlossen. Hierzu liegt das Zwischenmembranelement 48 mit der elastomeren Umhüllung der Ringscheibe 54 an einem mit Bezugszeichen 74 gekennzeichneten Anlagebereich des elastomeren Dämpfungsgliedes 34, welcher in axialer Richtung durch den Käfig 36 als Versteifungselement verstärkt ist, an. Radial innen erfolgt die Abdichtung durch den auf das Innenteil 4 aufpressten Zwischenmembranstützring 52, der zwischen sich und der anschlussseitigen Stirnfläche 68 das elastomere Material des Zwischenmembranelementes 48 dichtend einklemmt. Der Zwischenmembranstützring 52 bildet dabei mit dem damit aufvulkanisierten Elastomermaterial der Zwischenmembran 50 einen inneren Ringwandungsabschnitt 76 aus, der auf das Innenteil 4 hier aufgeschoben und verpresst ist und in axialer Richtung durch Anlage an der anschlussseitigen Stirnfläche 68 gegenüber dem Innenteil 4 festgelegt ist.

Dabei ist die Zwischenmembran 50 derart ausgeformt, dass im zusammengebauten Zustand ein im Grunde durch die Ringscheibe 54 und deren elastomere Umhüllung gebildetes Dichtungssegment 78 des Zwischenmembranelementes 48 unter Vorspannung gegen den Anlagebereich 74 anliegt. Wäre das in dem Ausführungsbeispiel gezeigte Zwischenmembranelement für sich vorgesehen, würde aufgrund der Ausgestaltung der Zwischenmembran 50 das Dichtungssegment 78 die im zusammengebauten Zustand an der anschlussseitigen Stirnfläche 68 anliegende Stirnseite des Ringwandungsabschnitts 76 überragen, d.h. um einen Versatz vorspringen. Dieser Versatz wird beim Einbau des Zwischenmembranelementes 48 unter elastischer Vorspannung der flexiblen Wandungen des Ringkammersegmentes 66 vollständig aufgehoben, so dass die vordere Stirnseite des Ringwandungsabschnitts 76 in etwa höhengleich einer durch das Ringsegment 78 ausgeformten und mit dem Anlagebereich 74 des elastomeren Dämpfungsgliedes 34 zusammenwirkenden Dichtfläche 80 angeordnet wird. Durch diese axiale Vorspannung des Zwischenmembranelementes 48 wird die Dichtigkeit zwischen diesem Element 48 und dem elastomeren Dämpfungsglied 34 verbessert.

Wie in den Figuren 2 und 3 zu entnehmen ist, bildet das elastomere Dämpfungsglied 34 an gegenüberliegenden Umfangsabschnitten radial einander gegenüberliegende Radialanschlagkonturen 82 aus, in denen sich mit Bezugszeichen 84 gekennzeichnete Zusatzelemente befinden, die aus einem Thermoplasten hergestellt sind. Das gezeigte Ausführungsbeispiel hat zwei Zusatzelemente 84 a, 84 b, die jeweils nach Art eines Halbringes ausgeformt und in der Figur 2 gezeigten Schnittebene miteinander gefügt sind. Die Zusatzelemente 84 liegen dichtend an der Innenumfangsfläche der Buchse 2 an und schließen dort einen mit Bezugszeichen 86 gekennzeichneten Radialkanal und einen mit Bezugszeichen 88 gekennzeichneten Axialkanal ein. In Figur 2 sind weiterhin innerhalb der Zusatzelemente 84 a, b kreisrunde Bohrungen zu erkennen. Dort sind die beiden Zusatzelemente 84 a, b durch Zapfen miteinander verbunden, so dass sich durch die beiden Zusatzelement 84 ein im Grunde zylindrisches Bauteil ergibt (Vergleiche Figur 3). Zwischen den Radialanschlagkonturen 82 und der Innenumfangsfläche der Zusatzelemente 84 ist jeweils eine Radialkammer 90 eingeschlossen. Diese Radialkammern 90 a, 90 b kommunizieren über den Radialkanal 86 miteinander. Diese Ausgestaltung ist insbesondere in Figur 3 zu erkennen. Die Figur lässt auch den Verlauf des Axialkanals 88 erkennen, der durch einen zwischen wesentlichen in axialer Richtung erstreckenden Kanalabschnitt 88 a in die Pumpkammer 64 mündet, dann in einen sich nahezu vollumfänglich an der Außenseite der Zusatzelemente 84 erstreckenden Umfangsabschnitt 88 b übergeht. Am Ende dieses Umfangsabschnittes 88 b wird der Axialkanal 88 in zwei Kanalzweige 88 c, 88 d aufgeteilt, von denen der eine Kanalzweig 88 c in eine der ersten Axialkammern 42 a und der andere Kanalzweig 88 d in die andere der ersten Kanalkammern 42 b mündet. Dementsprechend ist jede der ersten Axialkammern 42 a, 42 b an der Lageroberseite 22 über den Axialkanal 88 mit der an der Anschlussseite 6 vorgesehenen Axialkammer 64 verbunden.

Praktische Versuche der Anmelderin haben ergeben, dass durch die Aufteilung die auf der einen Lageroberseite 22 vorgesehenen Axialkammer in mehrere unabhängige, in Umfangsrichtung getrennt voneinander vorgesehene Axialkammerteile 42 a, 42 b die Dämpfungseigenschaften des Lagers bei radialer Anregung verbessert werden können. Insbesondere erweist sich das Lager bei hohen Frequenzen als weniger steif. Dieser Effekt kann bei Bedarf noch durch eine entsprechende Teilung der auf der Anschlussseite 6 vorgesehenen Pumpkammer 64 erhöht werden. So ist es ohne weiteres denkbar, die Pumpkammer durch Teilungen in Umfangsrichtung in separate und voneinander getrennte Segmente zu unterteilen, die als Teil des Zwischenmembranelementes 48 aus dem elastomeren Material des Zwischenmembranelementes 48 ausgeformt sind und den zwischen diesem Element und dem Lagermembranelement 16 ausgebildeten Ringspalt beispielsweise in der Zeichnungsebene gemäß Figur 1 durchsetzen. In einem solchen Fall würde auch der axiale Kanalabschnitt 88 a auf zwei Kanalzweige aufgeteilt und mit den entsprechenden einzelnen Pumpkammersegmenten verbunden.

Bei den gezeigten Ausführungsbeispielen sind die einzelnen Elemente lediglich durch Verpressen bzw. Umwirbein miteinander verbunden. Insbesondere ist keine stoffschlüssige Verbindung zwischen dem elastomeren Dämpfungsglied 34 und dem Gegenmembranelement 30 bzw. dem Zwischenmembranelement 48 vorgesehen. Auch die Verbindung zwischen dem Zwischenmembranelement 48 und dem Lagermembranelement 16 ist keine stoffflüssige, sondern lediglich eine kraftschlüssige Verbindung.

Die Zusatzelemente 84 begrenzen in an sich bekannter Weise die radiale Ausgleichsbewegung des Buchsenlagers und dienen dementsprechend als Radialanschlag. Der zuvor beschriebene untere axiale Anschlagpuffer 18 begrenzt eine etwaige Taumelbewegung der axialen Anschlagscheibe 20 relativ zu der Buchse 2.

### Bezugszeichenliste

- 2: Buchse
- 4: Innenteil
- 6: Anschlussseite
- 8: Anlageschulter
- 10: Lagermembran, axial
- 12: Haltering
- 14: Stützflansch
- 16: Lagermembranelement
- 18: Anschlagpuffer, axial, unten
- 20: Anschlagscheibe, axial
- 22: Lageroberseite
- 24: Gegenmembran
- 26: Stützring
- 28: Haltering
- 30: Gegenmembranelement
- 32: Gegenmembrananlageschulter
- 34: Elastomeres Dämpfungsglied
- 35: Radiale Kammerwand
- 36: Käfig
- 38: Teilung
- 40: Ringkanal
- 42: Erste Axialkammern
- 44: Mulde
- 46: Mulde
- 48: Zwischenmembranelement
- 50: Zwischenmembran
- 52: Zwischenmembranstützring
- 54: Ringscheibe
- 56: Anschlagselement
- 58: Stift
- 60: Abstandsnocken
- 62: Innere Ringfläche
- 64: Axialkammer/Pumpkammer
- 66: Ringkammersegment
- 68: Anschlussseitige Stirnfläche
- 70: Ringkammer
- 72: Flüssigkeitsleere Dämpfungskammer
- 74: Anlagebereich
- 76: Ringwandungsabschnitt
- 78: Dichtungssegment
- 80: Dichtfläche
- 82: Radialanschlagkontur
- 84: Zusatzelement
- 84a: Zusatzelement
- 84b: Zusatzelement
- 86: Radialkanal
- 88: Axialkanal
- 88a: axialer Kanalabschnitt
- 88b: Umfangsabschnitt
- 88c: Kanalzweig
- 88d: Kanalzweig
- 90: Radialkammer

## Patentansprüche

1. Hydraulisch dämpfendes Buchsenlager mit einem länglichen Innenteil (4), einer Außenbuchse (2), einem zwischen der Außenbuchse (2) und dem Innenteil (4) angeordneten elastomeren Dämpfungsglied (34), einem Axialkammerpaar mit wenigstens zwei in axialer Richtung des Innenteils (4) versetzt zueinander angeordneten und miteinander über zumindest einen Axialkanal (88) kommunizierenden Axialkammern (42, 64), einem Radialkammerpaar mit wenigstens zwei zwischen den Axialkammern (42, 64) angeordneten und in Umfangsrichtung des Innenteils versetzt angeordneten Radialkammern (90), die über wenigstens einen Radialkanal (86) kommunizieren, **dadurch gekennzeichnet, dass** zwischen den in axialer Richtung versetzt zueinander vorgesehenen Axialkammern (42, 64) wenigstens eine flüssigkeitsleere Dämpfungskammer (72) vorgesehen ist, die teilweise durch das elastomere Dämpfungsglied (34) und teilweise durch Wandungen eines auf das elastomere Dämpfungsglied (34) aufgesetzten Zwischenmembranelementes (48) begrenzt ist.

2. Hydraulisch dämpfendes Buchsenlager nach Anspruch 1, **dadurch gekennzeichnet, dass** die flüssigkeitsleere Dämpfungskammer (72) in Umfangsrichtung durchgehend ausgebildet ist.

3. Hydraulisch dämpfendes Buchsenlager nach Anspruch 1 oder 2, **dadurch gekennzeichnet, dass** das Zwischenmembranelement (48) ein Ringkammersegment (66) zur Ausbildung einer Ringkammer (70) der flüssigkeitsleeren Dämpfungskammer (72) und ein dichtend an das elastomere Dämpfungsglied (34) anlegbares Dichtungssegment (78) ausformt.

4. Hydraulisch dämpfendes Buchsenlager nach Anspruch 3, **dadurch gekennzeichnet, dass** das Zwischenmembranelement (48) derart ausgebildet ist, dass ein innerer Ringwandungsabschnitt (76) des Ringkammersegmentes (66) auf das Innenteil (4) aufschiebbar und in axialer Richtung gegenüber dem Innenteil (4) derart festgelegt ist, dass das Dichtungssegment (78) in einem ungespannten Ausgangszustand gegenüber einer Stirnseite des Ringwandungsabschnitts (76) in Richtung auf das elastomere Dämpfungsglied (34) mit einem Versatz vorspringt.

5. Hydraulisch dämpfendes Buchsenlager nach Anspruch 3 oder 4, **dadurch gekennzeichnet, dass** das elastomere Dämpfungsglied (34) im Anlagebereich (74) der von dem Dichtungssegment (78) ausgebildeten Dichtfläche (80) mit wenigstens einem, sich im Wesentlichen in axialer Richtung erstreckenden Versteifungselement (36) verstärkt ist.

6. Hydraulisch dämpfendes Buchsenlager nach einem der vorherigen Ansprüche, **gekennzeichnet durch** wenigstens ein mit dem Zwischenmembranelement (48) verbundenes und mit dem elastomeren Dämpfungsglied (34) zusammenwirkendes Anschlagselement (56).

7. Hydraulisch dämpfendes Buchsenlagen nach Anspruch 6, **dadurch gekennzeichnet, dass** das Anschlagselement (56) als separates Bauteil hergestellt und mit einer einen Kern des Zwischenmembranelementes bindenden Ringscheibe (54) verbunden ist.

8. Hydraulisch dämpfendes Buchsenlager nach einem der vorherigen Ansprüche, **dadurch gekennzeichnet, dass** zumindest auf einer Seite der Radialkammern zumindest zwei in Umfangsrichtung voneinander beabstandete und getrennte erste Axialkammern (42 a, 42 b) vorgesehen sind.

9. Hydraulisch dämpfendes Buchsenlager nach Anspruch 8, **dadurch gekennzeichnet, dass** die in Umfangsrichtung voneinander beabstandeten ersten Axialkammern (42a, 42b) durch eine an dem elastomeren Dämpfungsglied (34) ausgeformte Teilung (38) voneinander getrennt sind.

10. Hydraulisch dämpfendes Buchsenlager nach Anspruch 9, **dadurch gekennzeichnet, dass** eine die ersten Axialkammern (42a, 42b) begrenzende Gegenmembran (24) auf der Teilung (38) aufliegt.

## Claims

1. Hydraulically damping bush bearing comprising an elongated inner part (4), an outer bush (2), an elastomeric damping member (34) arranged between the outer bush (2) and inner part (4), a pair of axial chambers with at least two axial chambers (42, 64) offset from one another in the axial direction of the inner part (4) and communicating with one another via at least one axial passage (88), a pair of radial chambers comprising at least two radial chambers (90) which communicate via at least one radial channel (86), are arranged between the axial chambers (42, 64), and are offset in the circumferential direction of the inner part **characterised in that** there is at least one fluid-free damping chamber (72) between the axial chambers (42, 64) arranged offset from one another in the axial direction which is bordered partly by the elastomeric damping member (34) and partly by the walls of an intermediary diaphragm element (48) placed on the elastomeric damping member (34).

2. Hydraulically damping bush bearing according to claim 1, **characterised in that** the fluid-free damping chamber (72) is designed to be continuous in the circumferential direction.

3. Hydraulically damping bush bearing according to claim 1 or 2, **characterised in that** the intermediary diaphragm element (48) shapes an annual chamber segment (66) to form an annual chamber (70) of the fluid-free damping chamber (72) and a sealing segment (78) that can be placed on the elastomeric damping member (34) to form a seal.

4. Hydraulically damping bush bearing according to claim 3, **characterised in that** the intermediary diaphragm element (48) is designed in such a way that an inner annular wall section (76) of the annual chamber segment (66) can be slid onto the inner part (4) and is affixed in the axial direction with regard to the inner part (4) in such a way that the sealing segment (78) protrudes in the direction of the elastomeric damping member (34) with an offset in a tension-free output state with regard to a front side of the annular wall section (76).

5. Hydraulically damping bush bearing according to claim 3 or 4, **characterised in that** the elastomeric damping member (34) is reinforced in the contact area (74) of the sealing surface (80) formed by sealing segment (78) with at least one stiffening element (36) that extends essentially in the axial direction.

6. Hydraulically damping bush bearing according to one of the preceding claims, **characterised by** at least one stop element (56) connected to the intermediary diaphragm element (48) and acting together with the elastomeric damping member (34).

7. Hydraulically damping bush bearing according to claim 6, **characterised in that** the stop element (56) is manufactured as a separate component and is connected to an annular disc (54) binding a core of the intermediary diaphragm element.

8. Hydraulically damping bush bearing according to one of the preceding claims, **characterised in that** at least two first axial chambers (42a, 42b) spaced and separated from one another in the circumferential direction are provided at least on one side of the radial chambers.

9. Hydraulically damping bush bearing according to claim 8, **characterised in that** the first axial chambers (42a, 42b) spaced apart from one another in the circumferential direction are separated from one another by a partition (38) moulded on the elastomeric damping member (34).

10. Hydraulically damping bush bearing according to claim 9, **characterised in that** a counter-diaphragm (24) bordering the first axial chambers (42a, 42b) lies on partition (38).

## Revendications

1. Coussinet assurant un amortissement hydraulique, avec une partie intérieure (4) allongée, une douille extérieure (2), un élément d'amortissement élastomère (34) disposé entre la douille extérieure (2) et la partie intérieure (4), une paire de chambres axiales avec au moins deux chambres axiales (42, 64) disposées avec un décalage entre elles dans la direction axiale de la partie intérieure (4) et communiquant entre elles par le biais d'au moins un canal axial (88), une paire de chambres radiales avec au moins deux chambres radiales (90), disposées entre les chambres axiales (42, 64) et disposées avec un décalage entre elles dans la direction circonférentielle de la partie intérieure, qui communiquent par le biais d'au moins un canal radial (86), **caractérisé en ce que**, entre les chambres axiales (42, 64) prévues avec un décalage entre elles dans la direction axiale, il est prévu au moins une chambre d'amortissement (72) vide de liquide qui est limitée partiellement par l'élément d'amortissement élastomère (34) et partiellement par des parois d'un élément de membrane intermédiaire (48) posé sur l'élément d'amortissement élastomère (34).

2. Coussinet assurant un amortissement hydraulique selon la revendication 1, **caractérisé en ce que** la chambre d'amortissement (72) vide de liquide est constituée de façon continue dans la direction circonférentielle.

3. Coussinet assurant un amortissement hydraulique selon la revendication 1 ou 2, **caractérisé en ce que** l'élément de membrane intermédiaire (48) forme un segment de chambre annulaire (66) pour la formation d'une chambre annulaire (70) de la chambre d'amortissement (72) vide de liquide et un segment d'étanchéité (78) pouvant être placé de façon étanche sur l'élément d'amortissement élastomère (34).

4. Coussinet assurant un amortissement hydraulique selon la revendication 3, **caractérisé en ce que** l'élément de membrane intermédiaire (48) est constitué de telle sorte qu'un tronçon de paroi annulaire (76) intérieur du segment de chambre annulaire (66) peut être glissé sur la partie intérieure (4) et être immobilisé dans la direction axiale par rapport à la partie intérieure (4) de telle sorte que le segment d'étanchéité (78), dans un état initial non serré, dépasse avec un décalage par rapport à un côté frontal du tronçon de paroi annulaire (76) en direction de l'élément d'amortissement élastomère (34).

5. Coussinet assurant un amortissement hydraulique selon la revendication 3 ou 4, **caractérisé en ce que**, dans la zone d'appui (74) de la surface d'étanchéité (80) constituée par le segment d'étanchéité (78), l'élément d'amortissement élastomère (34) est renforcé par au moins un élément de raidissement (36) s'étendant essentiellement dans la direction axiale.

6. Coussinet assurant un amortissement hydraulique selon l'une des revendications précédentes, **caractérisé par** au moins un élément de butée (56) raccordé à l'élément de membrane intermédiaire (48) et coopérant avec l'élément d'amortissement élastomère (34).

7. Coussinet assurant un amortissement hydraulique selon la revendication 6, **caractérisé en ce que** l'élément de butée (56) est fabriqué en tant que composant séparé et est raccordé à un disque annulaire (54) liant un noyau de l'élément de membrane intermédiaire.

8. Coussinet assurant un amortissement hydraulique selon l'une des revendications précédentes, **caractérisé en ce que**, au moins sur un côté des chambres radiales, il est prévu au moins deux première chambres axiales (42 a, 42 b) espacées l'une de l'autre dans la direction circonférentielle et séparées.

9. Coussinet assurant un amortissement hydraulique selon la revendication 8, **caractérisé en ce que** les première chambres axiales (42 a, 42 b) espacées l'une de l'autre dans la direction circonférentielle sont séparées les unes des autres par une séparation (38) formée sur l'élément d'amortissement élastomère (34).

10. Coussinet assurant un amortissement hydraulique selon la revendication 9, **caractérisé en ce qu'**une contre-membrane (24) limitant les premières chambres axiales (42a, 42b) repose sur la séparation (38).
